# Europäisches Patentamt
## European Patent Office
## Office européen des brevets

(11) Numéro de publication: **0 055 158**
**B1**

(12) **FASCICULE DE BREVET EUROPEEN**

(45) Date de publication du fascicule du brevet:
**02.04.86**

(21) Numéro de dépôt: **81401910.5**

(22) Date de dépôt: **02.12.81**

(51) Int. Cl.⁴: **H 02 G 7/20**

(54) Dispositif de liaison de sécurité pour lignes électriques aériennes, comprenant au moins deux chaînes d'isolateurs long fût.

(30) Priorité: **03.12.80 FR 8025695**

(43) Date de publication de la demande:
**30.06.82 Bulletin 82/26**

(45) Mention de la délivrance du brevet:
**02.04.86 Bulletin 86/14**

(84) Etats contractants désignés:
**CH DE LI**

(56) Documents cités:
**DE - A - 2 656 607**
**DE - A - 2 712 979**
**DE - A - 2 753 544**
**DE - A - 2 820 926**
**DE - A - 2 844 881**
**DE - B - 1 286 168**
**DE - C - 974 801**

(73) Titulaire: **SOCIETE D'APPAREILLAGE AUXILIAIRE POUR L'ELECTRICITE Societe Anonyme dite:, 10 rue Jacquard, F-27031 Evreux Cedex (FR)**

(72) Inventeur: **Mischler, Jean-Jacques, Résidence Douce France 71, Rue Maillot, F-27000 Evreux (FR)**

(74) Mandataire: **Thevenet, Jean-Bruno, Cabinet BEAU DE LOMENIE 55 rue d'Amsterdam, F-75008 Paris (FR)**

ACTORUM AG

## Description

Dispositif de liaison de sécurité pour lignes aériennes, comprenant au moins deux chaînes d'isolateurs long fût.

La présente invention a pour objet un dispositif de liaison de sécurité de lignes aériennes de transport d'énergie électrique par rapport à un support tel qu'un pylône, comprenant au moins deux chaînes d'isolateurs rigides par l'intermédiaire desquelles les câbles sont reliés mécaniquement audit support, chaque chaîne d'isolateurs étant fixée par une première extrémité à un premier dispositif de jonction lui-même relié au support par au moins une chaîne, et par une deuxième extrémité à un deuxième dispositif de jonction sur lequel sont agencés des moyens d'ancrage ou de suspension des câbles, chaque chaîne d'isolateurs coopère avec des moyens mécaniques de liaison capables d'absorber de l'énergie par déformation et montés de manière à agir en cas de rupture accidentelle d'une chaîne d'isolateurs afin d'atténuer les effets dynamiques produits par la rupture, sur la ou les autres chaînes restées intactes, au moins l'un des premier et deuxième dispositifs de jonction comprenant au moins un palonnier, les moyens mécaniques de liaison absorbeurs d'énergie coopérant directement avec ledit palonnier, et au moins un moyen absorbeur d'énergie étant prévu pour coopérer avec chaque chaîne d'isolateurs, ce dernier moyen comprenant au moins une pièce coudée dont une première extrémité est fixée sur le palonnier correspondant et une deuxième extrémité est fixée au voisinage d'un capot d'extrémité de chaîne d'isolateurs.

Les câbles aériens de transport d'énergie électrique, notamment les lignes à très haute tension, par exemple de l'ordre de 300 à 400 kV, nécessitent des dispositifs d'isolation et de liaison à un support tel qu'un pylône qui doivent répondre à des conditions de sécurité très strictes et mettent en œuvre généralement plusieurs ensembles d'isolateurs électriques répartis en chaînes parallèles.

Les chaînes d'isolateurs peuvent être disposées horizontalement ou verticalement selon les applications envisagées et les câbles sont alors reliés au dispositif de liaison et d'isolation par ancrage, par exemple à l'aide de manchons, ou suspension, généralement à l'aide de dispositifs à pinces. On utilise souvent des chaînes d'isolateurs souples qui présentent de très grandes possibilités de flexion. Toutefois, les chaînes d'isolateurs peuvent également être réalisées sous forme d'ensembles rigides monoblocs de longueur relativement importante, par exemple, de l'ordre du mètre. De telles chaînes d'isolateurs rigides, dites «long fût», sont la plupart du temps réalisées, comme d'ailleurs les chaînes souples, sous forme de chaînes doubles, dimensionnées de telle sorte qu'une seule branche puisse supporter l'ensemble du poids des câbles, en cas de rupture de l'une des branches.

Des problèmes particuliers se posent toutefois dans le cas d'une chaîne double long fût lorsqu'une des branches vient à être rompue accidentellement du fait de conditions atmosphériques par exemple, ou lors du montage, si une pièce d'armement, de pylône ou d'outillage vient à tomber sur un isolateur rompant ainsi l'une des branches de la chaîne double.

Dans un tel cas de rupture d'une chaîne, tous les efforts se retrouvent concentrés brusquement sur l'autre branche du dispositif d'isolation et les palonniers d'extrémité qui en temps normal relient les deux branches d'une chaîne double, sont amenés à effectuer une rotation pour réaliser de nouveau un alignement entre les efforts qui s'exercent au niveau des ancrages sur les palonniers, et la branche restée intacte.

Les efforts de flexion dynamiques qui sont exercés brusquement lors de la réorientation des palonniers après rupture d'une branche d'isolateurs sont alors extrêmement élevés et la rigidité des isolateurs en céramique est telle que généralement la branche restée encore intacte se brise sous l'influence des efforts de flexion dynamiques. A cela vient s'ajouter le fait que les parties de chaîne d'isolateurs déjà brisées viennent souvent frapper par effet dynamique la branche restée encore intacte, provoquant alors la cassure de celle-ci.

On connait déjà par le document DE-A-2 820 926 l'utilisation de pièces en U qui sont destinées à freiner le mouvement du cadre de support de chaînes d'isolateurs en cas de rupture de l'une des chaînes d'isolateurs et de réduire ainsi les efforts exercés sur la chaîne d'isolateurs restante. Ces pièces en U ne servent toutefois que de moyens d'absorption d'énergie par déformation afin d'atténuer les effets dynamiques produits par la rupture d'une chaîne, sur la chaîne restée intacte, et, du fait notamment qu'elles ne présentent que deux points d'articulation, ne présentent qu'une efficacité réduite, puisque l'absorption d'énergie ne peut se produire que par modification de la longueur de ces pièces, sans rattrapage de jeu possible. De telles pièces ne peuvent donc pas constituer des moyens de garantie de l'intégrité de la chaîne qui n'a pas été rompue.

Le document DE-A-2 656 607 montre par ailleurs, l'utilisation d'une pièce cylindrique d'absorption porteuse qui est disposée entre une chaîne d'isolateurs et un palonnier pour se déformer en cas de rupture de la chaîne et absorber ainsi de l'énergie.

Toutefois, une telle pièce cylindrique ne peut travailler qu'en traction puisqu'il n'y a pas de liaison directe en rotation entre ladite pièce et le palonnier, ce qui exclut une déformation par liaison positive et limite ce type de liaison à une application à des chaînes de suspension.

Le document DE-A-2 712 979 décrit l'utilisation de pièces déformables montées sur un palonnier pour absorber des efforts en cas de rupture de l'une des chaînes d'isolateurs. Les pièces déformables présentent cependant toutes une extrémité libre et ne peuvent pas travailler à la fois en flexion et en traction. De plus, ce document ne décrit pas de moyen de liaison amortisseur qui serait placé entre une chaîne d'isolateurs et le palonnier.

La présente invention a précisément pour objet de remédier aux inconvénients précités et notamment d'éviter que dans le cas de dispositifs de liaison pour câbles de haute tension mettant en œuvre une chaîne double ou multiple d'isolateurs rigides, la rupture de l'une des branches de la chaîne provoque la rupture de la ou des autres branches.

Ces buts sont atteints grâce à un dispositif de liaison du type mentionné en tête de la description, caractérisé en ce que pour chaque chaîne d'isolateurs deux pièces coudées formant moyens mécaniques de liaison absorbeurs d'énergie sont groupées par paire en étant situées de part et d'autre du plan du palonnier correspondant, chaque pièce coudée formant poutre d'égale résistance et comprenant des première et seconde branches reliées par un pont de liaison placé au voisinage d'une extrémité latérale du palonnier correspondant, et chaque pièce coudée étant fixée sur la palonnier correspondant par l'extrémité libre de sa première branche et par ledit pont de liaison, l'extrémité libre de la deuxième branche étant fixée au voisinage du capot d'extrémité de la chaîne d'isolateurs, de telle sorte que les pièces coudées groupées par paires constituent également des moyens mécaniques de retenue anti-collision qui, en cas de rupture accidentelle d'une chaîne d'isolateurs, forment obstacle au déplacement d'un tronçon de chaîne brisée vers la ou les autres chaînes restées intactes.

Selon un mode de réalisation, ladite paire de pièces coudées constitue à elle seule un moyen mécanique de liaison entre un connecteur de raccordement au capot d'extrémité de chaîne d'isolateurs et le palonnier correspondant.

Dans ce cas, le palonnier coopérant avec les pièces coudées présente avantageusement une base prolongée à faible distance des extrémités latérales sur lesquelles sont fixées les parties coudées des pièces, par des parties en saillie présentant une face latérale externe parallèle à l'axe du palonnier et capable de coopérer avec les rabats des extrémités des pièces en cas de déformation d'une paire de pièces lors de la rupture d'une chaîne d'isolateurs.

Selon un autre mode de réalisation, une rallonge est interposée entre une extrémité latérale du palonnier et un connecteur de fixation d'un capot d'extrémité de chaîne d'isolateurs, chaque pièce coudée étant fixée sur la rallonge par l'extrémité libre de sa deuxième branche.

Selon une autre caractéristique de l'invention, les moyens absorbeurs d'énergie comprennent au moins une pièce additionnelle interposée entre d'une part, un palonnier et, d'autre part, une chaîne commune de suspension du palonnier, ou des moyens communs d'ancrage ou de suspension de câbles reliés au palonnier.

Selon une première configuration, ladite pièce additionnelle est constituée par une poutre de déformation en U dont les branches enserrent partiellement la partie médiane du palonnier et sont fixées à celle-ci en deux points au moins, la largeur de la poutre parallèlement au palonnier, diminuant progressivement lorsque l'on s'éloigne du palonnier.

Selon une autre configuration, ladite pièce additionnelle comprend une tête en forme de U prolongée par deux branches courbes formant poutre d'égale résistance disposées de part et d'autre du palonnier et fixées à ce dernier d'une part du côté de la tête en un point commun situé sur l'axe médian du palonnier et d'autre part du côte de leur extrémité libre en un point qui forme avec le point de fixation commun et le point de fixation de l'extrémité libre de l'autre branche un triangle isocèle.

Selon encore une autre configuration, ladite pièce additionnelle comprend une paire de pièces coudées qui forment chacune poutre d'égale résistance, sont disposées de part et d'autre du palonnier et comprennent chacune une première branche fixée sur le palonnier correspondant et une deuxième branche dont l'extrémité libre est reliée à une chaîne commune de suspension du palonnier, et chaque pièce coudée est fixée sur le palonnier par l'extrémité libre de sa première branche et par le pont de liaison entre les première et deuxième branche de la pièce coudée, ledit pont de liaison étant fixé sur le palonnier en un point situé sur l'axe médian de ce dernier.

Il est avantageux que les moyens absorbeurs d'énergie coopérant avec les chaînes d'isolateurs, ainsi que les pièces additionnelles soient tous constitués par des pièces coudées.

Selon encore un mode de réalisation possible, au moins d'un des premier et deuxième dispositifs de jonction comprend deux palonniers disposés tête-bêche l'un des palonniers étant relié aux chaînes d'isolateurs et l'autre palonnier étant relié à au moins deux chaînes de suspension à un support ou au moins deux séries de moyens d'ancrage ou de suspension de câbles, et les moyens absorbeurs d'énergie comprennent au moins une paire d'équerres de part et d'autre des palonniers, chaque équerre présentant une aile perpendiculaire au plan des palonniers et placée selon la médiane de ceux-ci et des pattes de fixation sur chacun des palonniers.

D'autres caractéristiques et avantages de la présente invention ressortiront mieux de la description qui fait suite de plusieurs modes de réalisation de l'invention, en référence au dessin annexé, sur lequel:

— Les figures 1 et 2 sont des vues de dessus et en élévation d'un dispositif de liaison à double chaîne d'isolateurs rigides, selon un mode de réalisation de l'invention,

— la figure 3 montre une vue agrandie en plan d'un exemple de réalisation de pièces d'absorption d'énergie utilisées dans le dispositif des figures 1 et 2,

— la figure 4 est une section selon la ligne IV–IV de la figure 3,

– la figure 5 représente une variante du mode de réalisation des figures 1 et 2,

– la figure 6 est une vue en plan montrant un autre exemple de moyen absorbeur d'énergie utilisable avec un palonnier de jonction de chaînes d'isolateurs,

– la figure 7 est une vue en coupe selon la ligne VII–VII de la figure 6,

– les figures 8 et 9 sont des vues en plan montrant encore d'autres exemples de moyens absorbeurs d'énergie coopérant avec un palonnier, et

– la figure 10 est une vue en plan montrant encore un autre exemple de moyen d'absorption d'énergie utilisable avec un dispositif de jonction à double palonnier.

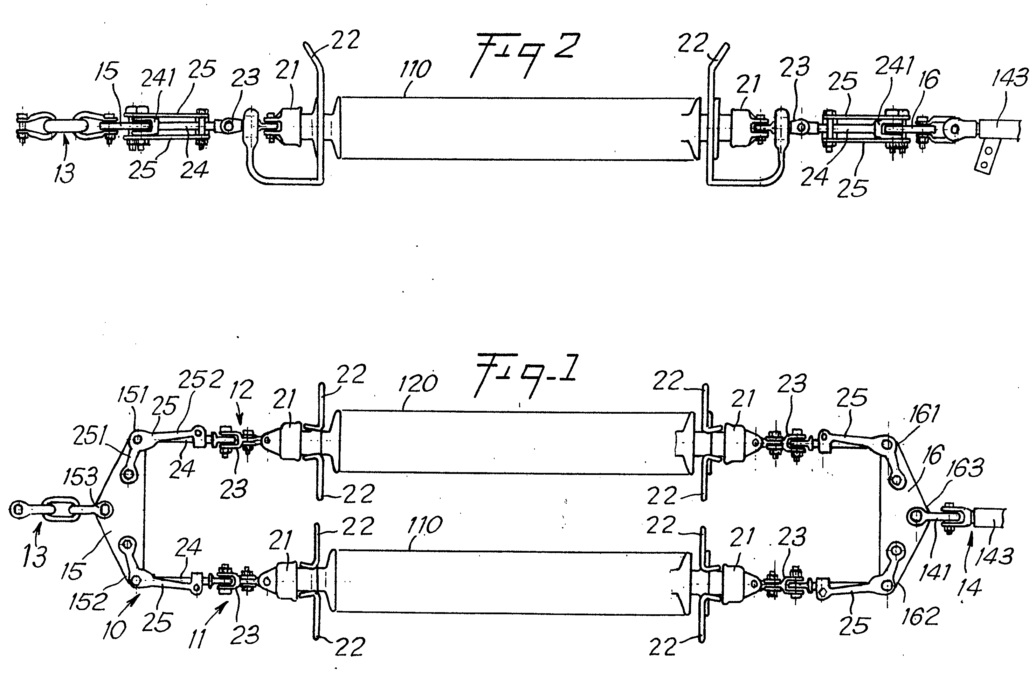

On voit sur la figure 1 un ensemble de liaison 10 destiné à permettre de réaliser l'ancrage de câbles aériens, non représentés, sur un support lié à la terre tel qu'un pylône. L'ensemble de liaison 10 assure une fonction d'isolation électrique grâce aux chaînes d'isolateurs rigides 110 et 120 qui sont disposés dans deux branches de liaison 11 et 12 réunies à une première extrémité, côté support, par un premier palonnier 15 et à une deuxième extrémité par un deuxième palonnier 16. Le palonnier 15 est lui-même associé à une chaîne commune 13 d'ancrage au pylône ou support, non représenté. Le palonnier 16 est également associé à des moyens 14 d'ancrage de câble qui comprennent sur l'exemple représenté sur les Fig. 1 et 2 un manchon 143 réuni au palonnier 16 par manille 141.

Chaque ensemble d'isolateurs 110, 120 se termine de façon classique à chaque extrémité par un capot métallique 21 en forme de cloche qui présente une paire de pattes formant bride et permet d'assurer une liaison avec les palonniers d'extrémité 15 et 16 par l'intermédiaire de connecteurs chantournés 23. Des anneaux 22 de protection contre les arcs électriques sont fixés, de façon connue en soi, sur les connecteurs 23 au voisinage des capots d'extrémité 21 des chaînes d'isolateurs rigides 110, 120.

Selon le mode de réalisation des Fig. 1 et 2 les connecteurs 23 de fixation des capots d'extrémité 21 ne sont pas boulonnés directement sur un palonnier 15 ou 16, mais sont fixés à une extrémité de tiges-rallonges 24 dont l'autre extrémité 241 également en forme de chape est fixée à une extrémité latérale 151, 152 du palonnier 15 ou une extrémité latérale 161, 162 du palonnier 16 respectivement. Par ailleurs, des pièces de déformation 25 sont associées aux rallonges 24 au voisinage de chacune des extrémités latérales 151, 152, 161, 162 des palonniers 15, 16.

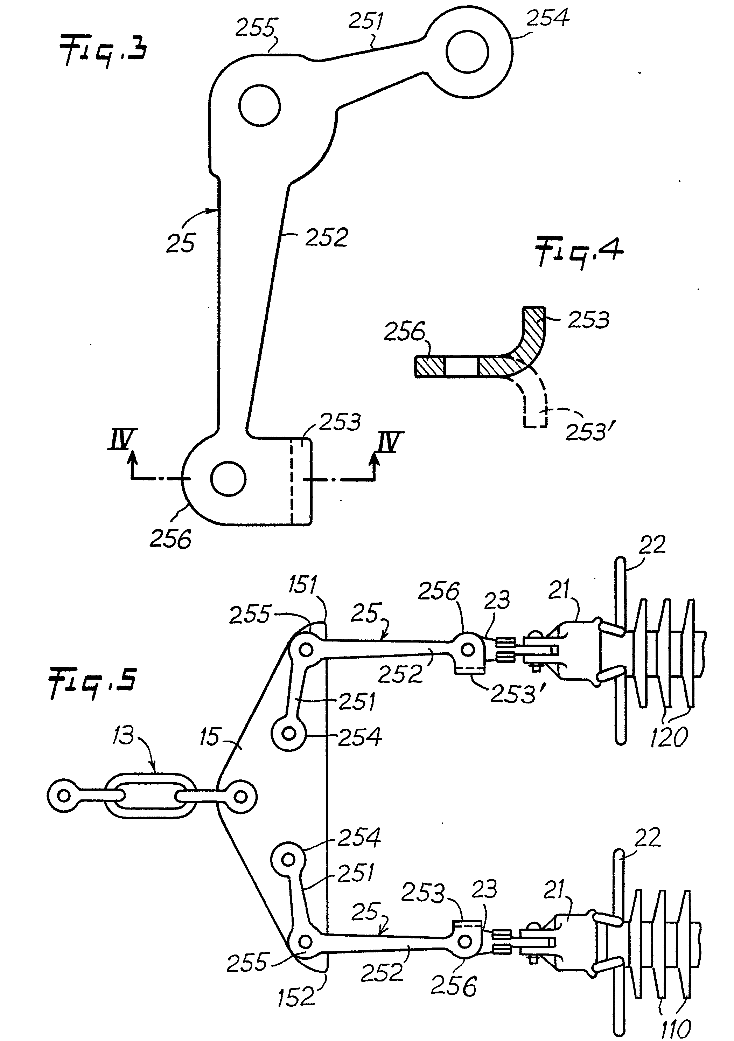

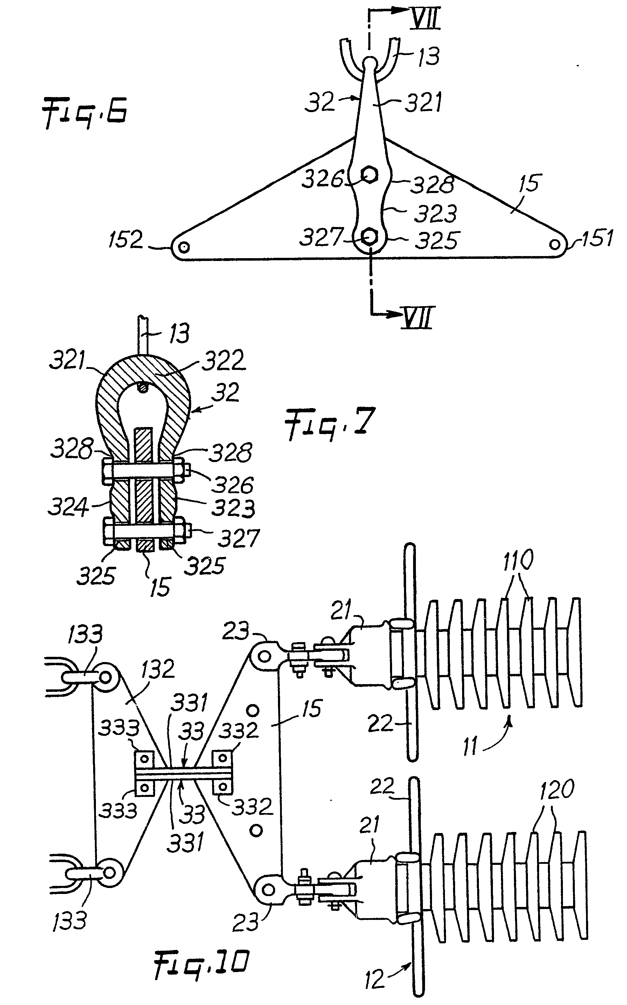

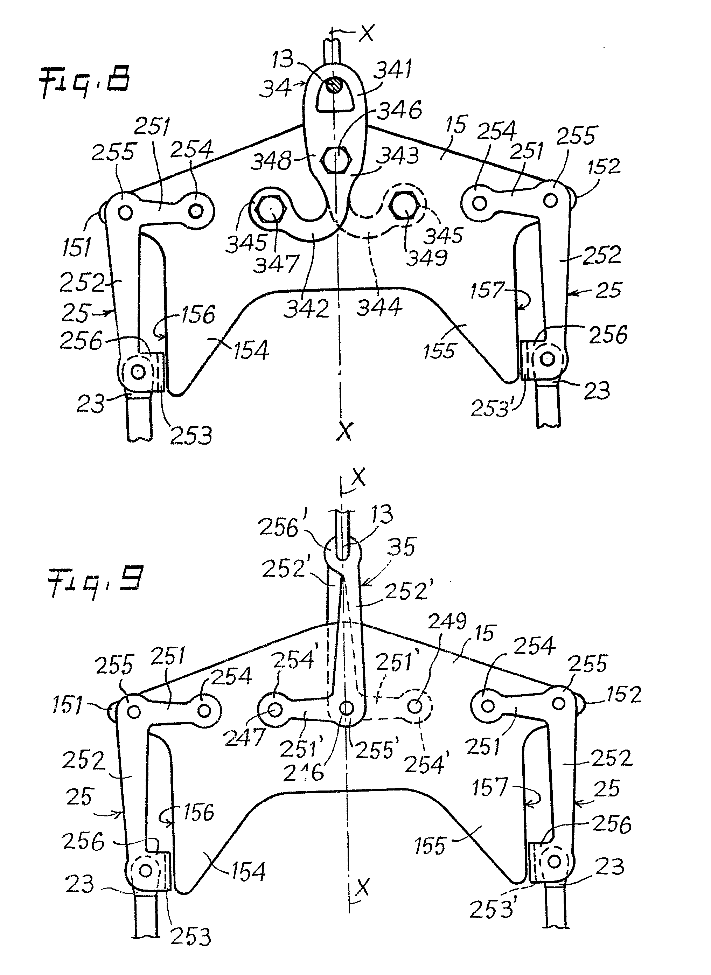

Comme on peut le voir sur les Fig. 1 et 2, une paire de pièces coudées 25 est associée à chaque rallonge 24. Les deux pièces 25 d'une même paire sont disposées de part et d'autre du palonnier 15, 16 et de la rallonge 24 auxquels elles sont associées. Les deux pièces 25 d'une même paire sont fixées au palonnier 15 ou 16 à l'aide d'éléments d'assemblage communs aux deux pièces. D'une manière générale, les pièces 25 constituent des poutres d'égale résistance et peuvent présenter des formes variées en fonction des applications. La Fig. 3 représente un exemple de pièce 25 capable de se déformer de façon plastique et d'absorber ainsi de l'énergie si, montée comme indiqué sur les Fig. 1 et 2 elle est sollicitée en flexion par suite de la rupture de l'une des chaînes 110, 120. Les diverses pièces 25 coopérant avec le palonnier 15 peuvent être rigoureusement semblables à celles qui coopèrent avec le palonnier 16, mais naturellement, les pièces 25 d'une même paire, bien que superposables, doivent être symétriques par rapport au plan du palonnier et présentent donc des parties rabattues d'extrémité 253, 253' respectivement tournées dans des sens opposés par rapport au plan de la pièce 25 (Fig. 4).

Une pièce coudée 25 telle que représentée sur la Fig. 3 présente une portion de tête 254 qui constitue l'extrémité d'une première branche 251 elle-même reliée par un coude 255 à une seconde branche 252 qui se termine par une partie élargie 256 prolongée par un rabat 253 perpendiculaire au plan de la pièce 25. Chacune des portions 254, 255, 256 est percée d'un orifice pour le passage d'un élément d'assemblage. La pièce 25 coopérant avec la pièce représentée sur la Fig. 3 au sein d'une même paire ne se différencie que par un rabat 253' en sens opposé.

Lorsque les pièces 25 sont positionnées de la manière représentée sur la Fig. 1, le fonctionnement est le suivant: Si par exemple le groupe d'isolateurs 110 vient subitement à se rompre, les effets axiaux qui sont exercés dans la direction de la chaîne 13 et des moyens d'ancrage 14 et appliqués aux sommets 153, 163 des palonniers 15, 16 tendent à provoquer l'alignement de la chaîne 12 encore intacte avec la chaîne 13 et les moyens d'ancrage 14. Des effets dynamiques sont alors exercés sur la chaîne 12, mais les paires de pièces 25 incluses dans la chaîne 12 et coopérant avec les extrémités latérales 151, 161 des palonniers 15, 16 tendent à s'écarter et absorbent ainsi de l'énergie qui provoque un amortissement des efforts auxquels sont soumis la chaîne 12 et les éléments 120. Parallèlement, les paires de pièces 25 situées dans la chaîne 11 supposée brisée servent d'éléments de retenue et empêchent le rejet brutal des tronçons de chaîne 11 vers la chaîne 12 encore intacte, jouant ainsi un rôle d'anti-collision.

On a décrit ci-dessus à titre d'exemple, la fonction de moyens mécaniques dissipateurs d'énergie associés au dispositif de liaison 10 et constitués par les pièces 25 coopérant avec des rallonges 24, qui permettent d'éloigner le point de pivotement lors d'un mouvement de réalignement après cassure d'une branche de la chaîne double.

Naturellement, des variantes et de nombreux autres modes de réalisation sont possibles. Ainsi, sur la Fig. 5, on peut voir des pièces coudées de déformation 25 qui sont montées par paires à chaque extrémité 151, 152 d'un palonnier 15 et sont tout à fait semblables à la pièce 25 de la Fig. 3 si ce n'est que l'extrémité libre 256 coopère directement avec un connecteur 23, tout en comportant toujours un rabat 253 ou 253'. Comme dans le cas du mode de réalisation des Fig. 1 et 2, deux pièces 25 d'une même paire sont superposés et enserrent le palonnier par leur première branche 251 fixée en deux points par les parties 254, 255 au palonnier 15. Toutefois, sur la Fig. 5, les pièces rallonges 24 ont été supprimées et les paires de pièces 25 permettent à elles seules d'assurer la retenue mécanique d'une chaîne d'isolateurs 11 ou 12, et lors de rupture d'une chaîne, de déplacer le centre de rotation et de servir, comme les pièces 25 le faisaient déjà dans l'agencement de la Fig. 1, de dissipateur d'énergie et d'élément de retenue anti-rejet d'un tronçon de chaîne brisée.

D'une manière générale, les différents modes de réalisation décrits peuvent être combinés entre eux et être appliqués aussi bien au palonnier 15 placé du côté du pylône de support de la ligne aérienne qu'au palonnier 16 placé du côté des moyens d'ancrage de câble (ou de suspension de câble dans le cas d'un dispositif de liaison 10 disposé verticalement).

On a également représenté sur les figures 6 à 10 des moyens de dissipation d'énergie qui peuvent être combinés avec les moyens précédemment décrits, mais ne jouent toutefois pas de rôle de rejet d'un tronçon de chaîne brisée. Ces moyens additionnels 32, 33, 34, 35 sont interposés entre un palonnier 15 et la chaîne commune 13 de suspension à un pylône. Toutefois, ces moyens pourraient également être interposés entre le palonnier 16 et les moyens d'ancrage 14 d'un câble, s'il est prévu un manchon 143 unique ou un deuxième palonnier pour faisceau multiple.

Selon le mode de réalisation représenté sur les figures 6 et 7, la pièce additionnelle est constituée par une poutre de déformation 32 réalisée par forgeage et se présentant sous la forme d'un U dont les branches 323, 324 enserrent la partie médiane du palonnier 15 et sont fixées en au moins deux points par des organes d'assemblage 326, 327. Les branches 323, 324 peuvent être aplaties en des zones 328, 325 pour faciliter le serrage des moyens d'assemblage 326, 327. La partie courbe supérieure 321 de la pièce 32 présente, vue de profil (figure 6), une épaisseur qui diminue régulièrement vers le haut entre la zone 328 de fixation au palonnier la plus proche du sommet du palonnier et le point d'ancrage 322 d'une chaîne 13 au sommet de la pièce 32. La pièce 32 peut ainsi jouer son rôle de poutre de déformation lorsqu'une rupture intervient sur l'une des chaînes d'isolateurs, non représentés sur la figure 6, raccordées aux extrémités latérales 151 et 152 du palonnier 15.

A titre de variante de moyens mécaniques de liaison dissipateurs d'énergie capables de coopérer avec un palonnier de dispositif de jonction, on a représenté sur la figure 8 d'une part une pièce 34 pouvant être interposée entre le palonnier 15 et par exemple une chaîne commune 13 de suspension du palonnier 15 et des pièces courbes 25 telles que celles décrites en référence aux figures 3 à 5, mais prévues pour coopérer également avec le palonnier 15 par leur extrémité 256.

Comme on peut le voir sur la figure 8, la pièce 34 comprend deux branches 343, 344 qui enserrent la partie centrale du palonnier 15 et sont fixées à celui-ci par un moyen d'assemblage 346. La tête 341 de la pièce 34 en forme de U est percée d'une ouverture pour le passage d'une extrémité de chaîne 13. Chaque branche 343, 344 est prolongée au-delà du premier point de fixation 346 par une partie courbe 342 formant poutre d'égale résistance et fixée à son extrémité libre 345 par un autre moyen d'assemblage 347, 349 sur le palonnier 15. Les seconds points de fixation 347, 349 des branches 343, 344 sont de préférence symétriques par rapport au plan médian du palonnier 15 et forment dans ce cas avec le point de fixation commun 346 un triangle isocèle dont la hauteur peut être relativement faible. La pièce 34 peut être réalisée par forgeage et ses parties 348, 345 coopérant avec les moyens d'assemblage 346, 347, 349 peuvent être aplaties.

Les pièces coudées 25 coopérant avec le palonnier 15 de la figure 8 peuvent être en tout point semblables aux pièces 25 des figures 3 à 5. Toutefois, dans le cas du mode de réalisation de la figure 8, le palonnier 15 présente une base prolongée, à faible distance des extrémités latérales 151, 152 sur lesquelles sont fixées les parties coudées 255 des pièces 25, par des parties en saillie 154, 155 présentant une face latérale externe 156, 157 parallèle à l'axe du palonnier et capable de coopérer avec les rabats 253, 253' des extrémités 256 des pièces 25 en cas de déformation d'une paire de pièces 25 par suite de la rupture de l'une des chaînes d'isolateurs. Dans ce cas, les rabats 253 et 253' des extrémités 256 des pièces 25 de la paire de pièces appartenant à la chaîne restée intacte prennent en effet appui sur la face correspondante 156 ou 157 du palonnier, pendant que les pièces 25 subissent une déformation plastique leur faisant jouer leur rôle de dissipateur d'énergie pour diminuer ainsi les contraintes exercées sur la chaîne d'isolateurs restée intacte.

La figure 9 montre un mode de réalisation similaire à celui de la figure 8 dans lequel toutefois on utilise en tant que moyens absorbeurs d'énergie formant moyens mécaniques de retenue anti-collision, et en tant que pièce additionnelle 35, exclusivement des pièces coudées en forme d'équerre telles que les pièces 25 de la figure 3. Ceci réduit les coûts de fabrication dans la mesure où la fabrication des diverses pièces capables d'absorber de l'énergie par déformation est standardisée.

Ainsi, sur la figure 9 on a remplacé la pièce unique 34 par une paire de pièces coudées 35 qui sont situées de part et d'autre du plan du palonnier 15, parallèlement à celui-ci et présentent, tout comme les pièces latérales 25, une portion de tête 254' fixée sur le palonnier et constituant l'extrémité d'une première branche 251' elle-même reliée par un coude 255' fixé sur le palonnier 15 en un point 246 situé sur l'axe médian de celui-ci, à une seconde branche 252' sensiblement dans l'axe X'X du palonnier, qui se termine par une partie supérieure élargie 256' percée d'un orifice pour le passage d'une extrémité de chaîne 13.

Les deux pièces 35 situées de part et d'autre du palonnier 15 constituent des poutres d'égale résistance et sont capables de se déformer de façon plastique et d'absorber ainsi de l'énergie si elles sont sollicitées en flexion par suite de la rupture de l'une des chaînes 110, 120 qui se terminent par les connecteurs 23. Les portions d'extrémité 254′ des pièces 35 situées de part et d'autre du palonnier 15 sont fixées sur le palonnier 15 en des points 247, 249 qui sont de préférence symétriques par rapport au plan médian du palonnier 15 mais peuvent être sensiblement alignés avec le point de fixation commun 246, ou former avec celui-ci un triangle isocèle de très faible hauteur.

On notera que les portions d'extrémité élargies 256′ des pièces 35 dans lesquelles est engagée une extrémité de chaîne 13 peuvent éventuellement ne pas comporter de rabat 253, 253′, comme représenté sur la figure 9.

Naturellement, les pièces 35 de la figure 9 pourraient également être associées à un palonnier 15 qui n'est pas relié aux chaînes d'isolateurs exclusivement par des pièces 25 comme dans le cas des figures 5 et 8, mais qui met en œuvre à la fois des pièces 25 d'absorption d'énergie et de retenue anti-rejet d'un tronçon de chaîne brisée et des rallonges 24, comme représenté sur les figures 1 et 2.

Si l'on se reporte à la Fig. 10, on voit un dispositif de jonction de deux branches 11, 12 d'une chaîne d'isolateurs double, destiné à assurer la liaison des branches 11, 12 avec des chaînes 133 de suspension à un support tel qu'un pylône. Toutefois, le dispositif de jonction décrit pourrait aussi servir à relier les branches 11, 12 à des manchons d'ancrage de câble, tout en gardant la même configuration.

Le dispositif de jonction de la Fig. 10 comprend deux palonniers 15, 132 placés tête-bêche et reliés entre eux par au moins une paire d'équerres 33 placées de part et d'autre du plan contenant les palonniers 15, 132 et jouant le rôle de pièces de déformation capables de dissiper l'énergie lors de l'apparition d'un déséquilibre provoqué par la rupture d'isolateurs 110 ou 120 de l'une des branches 11, 12.

Chacune des équerres 33 comprend une aile 331 placée perpendiculairement au plan des palonniers 15, 132 selon la médiane de ceux-ci et des pattes 332, 333 perpendiculaires à l'aile 331 et permettant la fixation de l'équerre respectivement sur les palonniers 15 et 132. Deux équerres d'une même paire peuvent être parfaitement symétriques par rapport au plan des palonniers et fixées par les mêmes organes d'assemblage. De chaque côté des palonniers, il est toutefois possible de disposer deux équerres 33 mises dos à dos comme représenté sur la Fig. 10.

Les différents éléments dissipateurs d'énergie décrits précédemment s'adaptent bien à des dispositifs d'isolation de câbles horizontaux (c'est-à-dire du type permettant un ancrage des câbles) ou verticaux (c'est-à-dire du type assurant une suspension des câbles).

## Revendications

1. Dispositif de liaison de sécurité de lignes aériennes de transport d'énergie électrique par rapport à un support tel qu'un pylône, comprenant au moins deux chaînes d'isolateurs rigides (11, 12) par l'intermédiaire desquelles les câbles sont reliés mécaniquement audit support, chaque chaîne d'isolateurs (11, 12) étant fixée par une première extrémité à un premier dispositif de jonction (15) lui-même relié au support par au moins une chaîne (13), et par une deuxième extrémité à un deuxième dispositif de jonction (16) sur lequel sont agencés des moyens d'ancrage ou de suspension (14) des câbles, chaque chaîne d'isolateurs (11, 12) coopère avec des moyens mécaniques de liaison (25, 32, 33, 34, 35) capables d'absorber de l'énergie par déformation et montés de manière à agir en cas de rupture accidentelle d'une chaîne d'isolateurs (11, 12) afin d'atténuer les effets dynamiques produits par la rupture, sur la ou les autres chaînes restées intactes (12, 11), au moins l'un des premier et deuxième dispositifs de jonction (15, 16) comprenant au moins un palonnier, les moyens mécaniques de liaison absorbeurs d'énergie (25, 32, 33, 34, 35) coopérant directement avec ledit palonnier, et au moins un moyen absorbeur d'énergie (25) étant prévu pour coopérer avec chaque chaîne d'isolateurs (11, 12), ce dernier moyen (25) comprenant au moins une pièce coudée (25) dont une première extrémité est fixée sur le palonnier correspondant (15, 16) et une deuxième extrémité est fixée au voisinage d'un capot d'extrémité (21) de chaîne d'isolateurs, caractérisé en ce que pour chaque chaîne d'isolateurs (11, 12) deux pièces coudées (25) formant moyens mécaniques de liaison absorbeurs d'énergie sont groupées par paire en étant situées de part et d'autre du plan du palonnier correspondant (15, 16), chaque pièce coudée (25) formant poutre d'égale résistance et comprenant des première et seconde branches (251, 252) reliées par un pont de liaison (255) placé au voisinage d'une extrémité latérale (151, 152; 161, 162) du palonnier correspondant (15, 16), et chaque pièce coudée (25) étant fixée sur le palonnier correspondant par l'extrémité libre (254) de sa première branche (251) et par ledit pont de liaison (255), l'extrémité libre (256) de la deuxième branche (252) étant fixée au voisinage du capot d'extrémité de la chaîne d'isolateurs (21), de telle sorte que les pièces coudées (25) groupées par paires constituent également des moyens mécaniques de retenue anti-collision qui, en cas de rupture accidentelle d'une chaîne d'isolateurs, forment obstacle au déplacement d'un tronçon de chaîne brisée (11, 12) vers la ou les autres chaînes restées intactes (12, 11).

2. Dispositif selon la revendication 1, caractérisé en ce que ladite paire de pièces coudées (25) constitue à elle seule un moyen mécanique de liaison entre un connecteur de raccordement (23) au capot d'extrémité de chaîne d'isolateurs (21) et le palonnier correspondant (15).

3. Dispositif selon la revendication 2, caractérisé en ce que le palonnier (15) coopérant avec les pièces coudées (25) présente une base prolongée à faible distance des extrémités latérales (151, 152) sur lesquelles sont fixées les parties coudées (255) des pièces (25), par des parties en saillie (154, 155) présentant une face latérale externe (156, 157) parallèle à l'axe du palonnier et capable de coopérer avec les rabats (253, 253') des extrémités (256) des pièces (25) en cas de déformation d'une paire de pièces (25) lors de la rupture d'une chaîne d'isolateurs.

4. Dispositif selon la revendication 1, caractérisé en ce qu'une rallonge (24) est interposée entre une extrémité latérale (151, 152; 161, 162) du palonnier et un connecteur (23) de fixation d'un capot d'extrémité de chaîne d'isolateurs (21) et en ce que chaque pièce coudée (25) est fixée sur la rallonge (24) par l'extrémité libre (253) de sa deuxième branche (252).

5. Dispositif selon l'une quelconque des revendications 1 à 4, caractérisé en ce que les moyens absorbeurs d'énergie comprennent au moins une pièce additionnelle (32, 33, 34, 35).

6. Dispositif selon la revendication 5, caractérisé en ce que ladite pièce additionnelle (32) est constituée par une poutre de déformation en U dont les branches enserrent partiellement la partie médiane du palonnier (15) et sont fixées à celle-ci en deux points au moins (326, 327), la largeur de la poutre parallèlement au palonnier, diminuant progressivement lorsque l'on s'éloigne du palonnier.

7. Dispositif selon la revendication 5, caractérisé en ce que ladite pièce additionnelle (34) comprend une tête (341) en forme de U prolongée par deux branches courbes formant poutre d'égale résistance (343, 344) disposées de part et d'autre du palonnier (15) et fixées à ce dernier d'une part du côté de la tête (34) en un point commun (346) situé sur l'axe médian du palonnier et d'autre part du côté de leur extrémité libre (345) en un point (347, 349) qui forme avec le point de fixation commun (346) et le point de fixation (349, 347) de l'extrémité libre de l'autre branche un triangle isocèle.

8. Dispositif selon la revendication 1, caractérisé en ce qu'au moins l'un des premier et deuxième dispositifs de jonction (15, 16) comprend deux palonniers (15, 132) disposés tête-bêche, l'un des palonniers (15) étant relié aux chaînes d'isolateurs (110, 120) et l'autre palonnier (132) étant relié à au moins deux chaînes de suspension (133) à un support ou au moins deux séries de moyens d'ancrage ou de suspension de câbles, et en ce que les moyens absorbeurs d'énergie comprennent au moins une paire d'équerres (33) disposées de part et d'autre des palonniers (15, 132) chaque équerre (33) présentant une aile (331) perpendiculaire au plan des palonniers et placée selon la médiane de ceux-ci et des pattes de fixation (332, 333) sur chacun des palonniers.

9. Dispositif selon la revendication 5, caractérisé en ce que ladite pièce additionnelle (35) comprend une paire de pièces coudées (25') qui forment chacune poutre d'égale résistance, sont disposées de part et d'autre du palonnier et comprennent chacune une première branche (251') fixée sur le palonnier correspondant (15) et une deuxième branche (252') dont l'extrémité libre (256') est reliée à une chaîne commune de suspension du palonnier, et en ce que chaque pièce coudée (25') est fixée sur le palonnier par l'extrémité libre (254') de sa première branche et par le pont de liaison (255') entre les première et deuxième branches (251', 252') de la pièce coudée (25'), ledit pont de liaison (255') étant fixé sur le palonnier (15) en un point situé sur l'axe médian de ce dernier.

10. Dispositif selon la revendication 9, caractérisé en ce que les moyens absorbeurs d'énergie (25, 35) sont tous constitués par des pièces coudées en forme d'équerre.

**Claims**

1. Safety device for the connection of overhead electrical power transmission lines with respect to a support such as a tower, comprising at least two rigid insulator strings (11, 12) by way of which the cables are mechanically connected to said support, each insulator string (11, 12) being fixed by a first end to a first joining device (15) which latter is joined to the support by at least a chain member (13), and by a second end to a second joining device (16) on which are provided means for anchoring or suspending (14) the cables, each insulator string (11, 12) cooperates with mechanical connection means (25, 32, 33, 34, 35) capable of absorbing energy by deformation and so mounted as to act in case of accidental breaking of one insulator string (11, 12) in order to diminish the dynamical effects produced by the breaking on the other undamaged string or strings (12, 11), at least one of said first and second joining devices (15, 16) comprising at least a compensation bar, the energy-absorbing mechanical connection means (25, 32, 33, 34, 35) cooperating directly with said bar, and at least one energy-absorbing means (25) being provided to cooperate with said insulator string (11, 12), this last means (25) comprising at least one bent piece (25) of which one end is secured to the corresponding compensation bar (15, 16) and a second end is secured close to an end cover (21) of insulator string, characterized in that for each insulator string (11, 12) two bent pieces (25), forming energy-absorbing mechanical connection means, are grouped in pairs, by being placed on either side of the plane of the corresponding compensation bar (15, 16), each bent piece (25) forming a girder of equal strength and comprising first and second branches (251, 252) joined together by a connecting bridge (255) placed close to a lateral end (151, 152; 161, 162) of the corresponding compensation bar (15, 16), and each bent piece (25) being secured to the corresponding compensation bar by the free end (254) of its first branch (251) and by said connecting bridge (255), the free end (256) of the second branch (252) being secured in the vicinity of the end cover of the insulator string (21), so that the bent pieces (25) which are in pairs also constitute mechanical anti-collision holding means which, in case of one insulator string breaking, oppose the displacement of a part of the broken string (11, 12) towards the other undamaged string or strings (12, 11).

2. Device according to claim 1, characterized in that said pair of bent pieces (25) constitutes in itself a mechanical connection means between a connector (23) with the end cover of insulator string (21) and the corresponding compensation bar (15).

3. Device according to claim 2, characterized in that said compensation bar (15) which cooperates with the bent pieces (25) has a base which is extended, over a short distance from the lateral ends (151, 152) on which are secured the bent parts (255) of pieces (25), by projecting parts (154, 155) presenting an external lateral face (156, 157) which is parallel to the axis of the compensation bar and adapted to cooperate with the bent-in portions (253, 253′) of the ends (256) of pieces (25) in case of deformation of a pair of pieces (25) when an insulator string breaks.

4. Device according to claim 1, characterized in that an extension piece (24) is placed between a lateral end (151, 152; 161, 162) of the compensation bar and a connector (23) securing an end cover of insulator string (21) and in that each bent piece (25) is fixed on said extension piece (24) by the free end (253) of its second branch (252).

5. Device according to any one of claims 1 to 4, characterized in that the energy-absorbing means comprise at least one additional piece (32, 33, 34, 35).

6. Device according to claim 5, characterized in that said additional piece (32) is constituted by a U-shaped deformation girder of which the branches partly encircle the middle part of the compensation bar (15) and are fixed to the latter in at least two points (326, 327), the width of the girder, in parallel relation to the compensation bar, reducing gradually, when moving away from said compensation bar.

7. Device according to claim 5, characterized in that said additional piece (34) comprises a U-shaped head (341) extended by two bent branches forming girders of equal strength (343, 344) placed on either side of the compensation bar (15) and secured to the latter on the one hand, on the head (34) side in a common point (346) situated on the median axis of the compensation bar, and on the other hand, on their free end (345) side in a point (347, 349) which forms with said common point (346) and the securing point (349, 347) of the free end of the other branch, an isosceles triangle.

8. Device according to claim 1, characterized in that at least one of the first and second joining devices (15, 16) comprises two compensation bars (15, 132) disposed in head-to-tail relation, one of said compensation bars (15) being joined to the insulator strings (110, 120) and the other compensation bar (132) being joined to at least two suspension chains (133) to a support or at least two series of cables anchoring or suspending means, and in that the energy-absorbing means comprise at least one pair of square plates (33) disposed on either side of the compensation plates (15, 132), each square plate (33) having a flanged edge (331) perpendicular to the plane of the compensation bars and placed along the median thereof and fastening lugs (332, 333) fastening them to each one of said compensation bars.

9. Device according to claim 5, characterized in that said additional piece (35) comprises a pair of bent pieces (25′) which each form a girder of equal strength, which are placed on either side of the compensation bar and which each comprise a first branch (251′) secured to the corresponding compensation bar (15) and a second branch (252′) of which one free end (256′) is connected to a common chain of suspension to the compensation bar, and in that each bent piece (25′) is secured to the compensation bar by the free end (254′) of its first branch and by the connecting bridge (255′) between the first and second branches (251′, 252′) of the bent piece (25′), said connecting bridge (255′) being secured to the compensation bar (15) in a point situated on the median axis thereof.

10. Device according to claim 9, characterized in that the energy absorbing means (25, 35) are all constituted by square-bent pieces.

**Patentansprüche**

1. Sicherheitsverbindungsvorrichtung für Freileitungen für den Transport von elektrischer Energie, zum Anschliessen an einem Träger, etwa einem Leitungsmast, mit wenigstens zwei starren Isolatorenketten (11, 12), durch die die Kabel mit dem Träger mechanisch verbunden sind, wobei jede Isolatorenkette (11, 12) befestigt ist: mit einem ersten Ende an einer ersten Anschlussvorrichtung (15), die ihrerseits durch wenigstens eine Kette (13) mit dem Träger verbunden ist, und mit einem zweiten Ende an einer zweiten Anschlussvorrichtung (16), an der eine Einrichtung (14) zum Verankern oder Aufhängen der Kabel ausgebildet ist, wobei jede Isolatorenkette (11, 12) mit mechanischen Verbindungseinrichtungen (25, 32, 33, 34, 35) zusammenarbeitet, die durch Verformung mechanische Energie absorbieren können und derart montiert sind, dass sie bei einem zufälligen Bruch einer Isolatorenkette (11, 12) derart wirken, dass sie die durch den Bruch erzeugten dynamischen Wirkungen auf die andere(-n) intakte(-n) Kette(-n) (12, 11) schwächen, wobei wenigstens die eine der ersten und zweiten Anschlussvorrichtungen (15, 16) wenigstens eine Wippe aufweist, wobei die energieabsorbierenden mechanischen Verbindungseinrichtungen (25, 32, 33, 34, 35) mit der Wippe unmittelbar zusammenarbeiten, und wobei wenigstens eine energieabsorbierende Einrichtung (25) vorgesehen ist, die mit jeder Isolatorenkette (11, 12) zusammenarbeitet, wobei die letztere Einrichtung (25) wenigstens ein Winkelstück (25) umfasst, von dem ein erstes Ende an der entsprechenden Wippe (15, 16) befestigt ist und ein zweites Ende in Nähe einer Endkappe (21) der Isolatorenkette befestigt ist, dadurch gekennzeichnet, dass für jede Isolatorenkette (11, 12) zwei Winkelstücke (25), die eine energieabsorbierende mechanische Verbindungseinrichtung bilden, beiderseits der Ebene der entsprechenden Wippe (15, 16) paarweise gruppiert sind, dass jedes Winkelstück (25) einen Träger mit gleichem Widerstand bildet und erste sowie zweite Schenkel (251, 252) aufweist, die durch eine in Nähe eines seitlichen Endes (151, 152; 161, 162) der entsprechenden Wippe (15, 16) angeordnete Verbindungsbrücke (255) miteinander verbunden sind, und dass jedes Winkelstück (25) durch das freie Ende (254) seines ersten Schenkels (251) und durch die genannte Verbindungsbrücke (255) an der entsprechenden Wippe befestigt ist, während das freie Ende (256) des zweiten Schenkels (252) in Nähe der Endkappe (21) der Isolatorenkette befestigt ist, und zwar derart, dass die paarweise gruppierten Winkelstücke (25) auch eine stossverhindernde mechanische Halteeinrichtung bilden, die bei einem zufälligen Bruch einer Isolatorenkette ein Hindernis gegen die Verschiebung eines gebrochenen Kettenabschnitts (11, 12) zu der (den) restlichen anderen Kette(-n) bilden.

2. Vorrichtung nach Anspruch 1, dadurch gekennzeichnet, dass das Paar von Winkelstücken (25) für sich eine mechanische Verbindungseinrichtung zwischen einem Anschlussglied (23) an der Endkappe (21) der Isolatorenkette und der entsprechenden Wippe (15) bildet.

3. Vorrichtung nach Anspruch 2, dadurch gekennzeichnet, dass die mit dem Winkelstück (25) zusammenarbeitende Wippe (15) eine Basis aufweist, die in geringem Abstand von den seitlichen Enden (151, 152), an denen die abgewinkelten Teile (255) der Winkelstücke (25) befestigt sind, durch überstehende Teile (154, 155) mit einer seitlichen Aussenfläche (156, 157) verlängert ist, die zur Achse der Wippe parallel ist und mit den Umbiegungen (253, 253') der Enden (256) der Winkelstücke (25) im Fall einer Verformung eines Paars von Winkelstücken (25) bei einem Bruch einer Isolatorenkette zusammenarbeiten kann.

4. Vorrichtung nach Anspruch 1, dadurch gekennzeichnet, dass zwischen einem seitlichen Ende (151, 152; 161, 162) der Wippe und einem Befestigungsglied einer Endkappe (21) eine Isolatorenkette ein Verlängerungsstück (24) angeordnet ist und dass jedes Winkelstück (25) mit dem freien Ende (253) seines zweiten Schenkels (252) am Verlängerungsstück (24) befestigt ist.

5. Vorrichtung nach einem der Ansprüche 1 bis 4, dadurch gekennzeichnet, dass die energieabsorbierenden Einrichtungen wenigstens ein Zusatzteil (32, 33, 34, 35) umfassen.

6. Vorrichtung nach Anspruch 5, dadurch gekennzeichnet, dass das Zusatzteil (32) aus einem U-förmigen Verformungsträger besteht, dessen Schenkel das Mittelteil der Wippe (15) teilweise einspannen und an diesem an wenigstens zwei Punkten (326, 327) befestigt sind, wobei die Breite des zur Wippe parallelen Trägers fortschreitend abnimmt, wenn man sich von der Wippe entfernt.

7. Vorrichtung nach Anspruch 5, dadurch gekennzeichnet, dass das Zusatzteil (34) einen U-förmigen Kopf (341) umfasst, der durch zwei einen Träger (343, 344) mit gleichem Widerstand bildende gekrümmte Schenkel verlängert ist, die beiderseits der Wippe (15) angeordnet und an dieser letzteren befestigt sind: einerseits auf der Seite des Kopfs (34) an einem gemeinsamen Punkt (346) auf der Mittelachse der Wippe und andererseits auf der Seite ihres freien Endes (345) an einem Punkt (347, 349), der mit dem gemeinsamen Befestigungspunkt (346) und dem Befestigungspunkt (349, 347) des freien Endes des anderen Schenkels ein gleichschenkeliges Dreieck bildet.

8. Vorrichtung nach Anspruch 1, dadurch gekennzeichnet, dass wenigstens eine der ersten und zweiten Anschlussvorrichtungen (15, 16) zwei einander entgegengesetzt zugewandte Wippen (15, 132) umfasst, wobei die eine (15) der Wippen mit den Isolatorenketten (110, 120) verbunden ist, während die andere Wippe (132) mit wenigstens zwei Ketten (133) verbunden ist zum Aufhängen an einem Träger oder an zwei Reihen von Einrichtungen zum Verankern oder Aufhängen von Kabeln, und dass die energieabsorbierenden Einrichtungen wenigstens ein Paar von beiderseits der Wippen (15, 132) angeordneten Bügeln (33) umfassen, wobei jeder Bügel (33) aufweist: einen zur Ebene der Wippen senkrechten und längs deren Mittellinie angeordneten Schenkel (331) und Laschen (332, 333) zur Befestigung an jeder der Wippen.

9. Vorrichtung nach Anspruch 5, dadurch gekennzeichnet, dass jedes Zusatzteil (35) ein Paar von Winkelstücken (25') umfasst, die jeweils einen Träger mit gleichem Widerstand bilden, beiderseits der Wippe angeordnet sind und jeweils aufweisen: einen ersten Schenkel (251'), der an der entsprechenden Wippe (15) befestigt ist, und einen zweiten Schenkel (252'), dessen freies Ende (256') mit einer gemeinsamen Aufhängekette der Wippe verbunden ist, und dass jedes Winkelstück (25') an der Wippe befestigt ist: mit dem freien Ende (254') seines ersten Schenkels und mit der Verbindungsbrücke (255') zwischen den ersten und zweiten Schenkeln (251', 252') des Winkelstücks (25'), wobei die Verbindungsbrücke (255') an der Wippe (15) an einem auf derselben Mittelachse gelegenen Punkt befestigt ist.

10. Vorrichtung nach Anspruch 9, dadurch gekennzeichnet, dass alle energieabsorbierenden Einrichtungen (25, 35) durch bügelförmige Winkelstücke gebildet sind.

Fig. 2

Fig. 1

Fig.3

255   251   254

25   252

Fig.4

256   253

IV   253   IV

253'

256

Fig.5

151
255   25   256   23   21   22

252
251   253'   120
254

13   15

254
251
22
21
254   23
253
25
255   256
252   110
152

Fig. 6

Fig. 7

Fig. 10

Fig. 8

Fig. 9